# EUROPÄISCHE PATENTSCHRIFT

(11) **EP 0 787 057 B1**
(45) Veröffentlichungstag und Bekanntmachung des Hinweises auf die Patenterteilung: **13.01.1999**
(21) Anmeldenummer: 95936479.5
(22) Anmeldetag: 12.10.1995
(51) Int. Cl.: B23H 9/14, B23H 9/00

(54) **VERFAHREN ZUM ELEKTROCHEMISCHEN BEARBEITEN VON STRÖMUNGSKANÄLEN METALLISCHER WERKSTÜCKE**
PROCESS FOR THE ELECTROCHEMICAL TREATMENT OF FLOW CHANNELS IN METAL WORKPIECES
PROCEDE POUR LE TRAITEMENT ELECTROCHIMIQUE DE CANAUX D'ECOULEMENT DANS DES PIECES METALLIQUES

(30) Priorität: 21.10.1994 DE 4437624
(43) Veröffentlichungstag der Anmeldung: 06.08.1997
(73) Patentinhaber: Frembgen, Fritz-Herbert, D-87700 Memmingen (DE)
(72) Erfinder: Frembgen, Fritz-Herbert, D-87700 Memmingen (DE)
(74) Vertreter: Hübner, Hans-Joachim, Dipl.-Ing.
(86) Internationale Anmeldenummer: EP9504020
(87) Internationale Veröffentlichungsnummer: WO9612586

(56) Entgegenhaltungen:
- EP-A- 0 402 840
- EP-A- 0 457 975
- WO-A-90/05039

## Beschreibung

Die Erfindung betrifft Verfahren zum elektrochemischen Bearbeiten von Strömungskanälen metallischer Werkstücke gemäß den Oberbegriffen der Patentansprüche 1 und 5.

Derartige Verfahren sind aus der WO-A-9005039 bekannt. Diesem Bearbeitungsprinzip liegt die Erkenntnis zugrunde, daß der Strömungswiderstand des Elektrolyten in Düsen bei deren elektrochemischer Bearbeitung in einer enfaßbaren Beziehung zu dem Strömungswiderstand steht, dem eine, eine Musterdüse durchströmende Betriebsflüssigkeit, z.B. Dieselöl unterliegt.

Mißt man also den Strömungswiderstand des eine Musterdüse durchströmenden Elektrolyten und nimmt diesen Meßwert als Sollgröße für die Serienbearbeitung der Düsenrohlinge, so sollen sich diese, auf diese Weise sehr genau kalibrieren lassen. Die feste Beziehung der Strömungswiderstände von Elektrolytflüssigkeit und dem Betriebsmedium, z.B. Prüföl soll sogar bei stark verschiedenem Drücken vorhanden sein (Seite 14, Zeile 18). Im Falle geringer Fehler in der festen Beziehung wird vorgeschlagen, die Viskosität des Elektrolyten an diejenige der Betriebsflüssigkeit anzupassen.

Das bekannte Verfahren ist grundsätzlich anwendbar, jedoch ist auch bei Viskositätsanpassung nur eine unvollkommene Reproduzierbarkeit erreichbar. D.h., die Durchflußwerte der bearbeiteten Düsen liegen in einem zu großen Toleranzbereich.

Die EP-A-0457975 zeigt einen ähnlichen Stand der Technik, bei dem der Eingang eines Mikroloches elektrochemisch bogenförmig erweitert wird. Dabei wird die, das Mikroloch passierende Strömungsmenge des Elektrolyten gemessen und in deren Abhängigkeit die elektrische Versorgung der Elektroden gesteuert. Die Erfahrung hat jedoch gezeigt, daß die Mikrolöcher im späteren Einsatz Durchflußwerte in einem zu großen Toleranzbereich aufwiesen.

Aufgabe der Erfindung ist es, das eingangs genannte Verfahren dahingehend zu verbessern, daß der Toleranzbereich der Strömungswiderstände der nach dem Verfahren bearbeiteten Werkstücke im späteren betrieblichen Einsatz verkleinert wird.

Diese Aufgabe wird durch die Verfahrensschritte gemäß Anspruch 1 und in einer Variante gemäß Anspruch 5 gelöst.

Im Gegensatz zur Lehre nach der WO 90/05039, bei der dem Elektrolytdruck während der Bearbeitung kein nennenswerter Einfluß beigemessen wird, liegt der Erfindung die Erkenntnis zugrunde, daß der Strömungswiderstand hauptsächlich von der Druckdifferenz abhängt, diese also für das Reproduzierbarkeits-Erfordernis bedeutender ist, als etwa die Viskosität des Elektrolyten. Die sich einstellende Druckdifferenz wächst mit der Höhe des aufgezwungenen Druckes. Je höher der Elektrolytdruck ist umso genauer können die Strömungswiderstände in den Düsen gemessen und diese damit kalibriert werden.

Obwohl der technische Aufwand für die Bereitstellung des hohen Elektrolytdruckes wächst, ist diese Verfahrensmaßnahme entscheidend für hochgenaue Bearbeitungen von Düsenkörpern, von denen gefordert wird, daß sie im praktischen Einsatz mit Prüföl unter einem entsprechend hohen Betriebsdruck Durchflußwerte mit Toleranzabweichungen von unter +/- 1 Prozent eines Nennwertes haben. Mit der Erfindung wird dieses Ziel erreicht.

Ganz gleich, ob der Strömungswiderstand über die Durchflußmenge oder über den Druckabfall bestimmt wird, wird gemäß einer Weiterbildung der Erfindung der eingangseitige Elektrolytdruck auf dem hohen Niveau in engen Grenzen konstant gehalten.

Gemäß einer weiteren Ausgestaltung der Erfindung wird der Volumenstrom des Elektrolyten ständig, also auch während der Bearbeitungszeit gemessen. Darunter fällt auch eine digitale Messung mit schnell aufeinanderfolgenden Meßschritten. Eine alternative Lösung im Rahmen der Erfindung besteht darin, daß die Bearbeitungszeiten und die Meßzeiten einander abwechseln, so daß der Volumenstrom bzw. der Druck des Elektrolyten nur während der Abschaltperiode des elektrochemischen Bearbeitungsvorganges gemessen wird. Da bei dieser Variante die Gasblasenbildung im Arbeitsspalt eliminiert ist, kann die Durchflußkalibrierung in noch engeren Grenzen garantiert werden.

Für die allermeisten Anwendungsfälle reicht es gemäß einer Weiterbildung der Erfindung aus, wenn wenigstens während der Endphase der Bearbeitung die Messung des Volumenstromes erfolgt, nachdem der Arbeitsstrom abgeschaltet ist.

Anhand der Zeichnung wird die Erfindung beispielsweise näher erläutert.

Es zeigt:

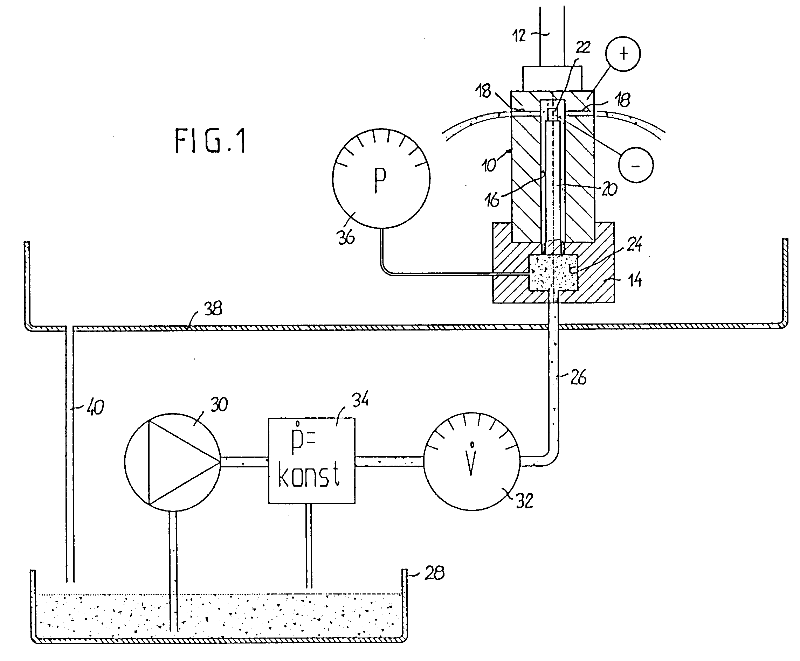

FIG. 1 eine schematische Ansicht des Elektrolytkreislaufes in einer elektrochemischen Bearbeitungsanlage,
FIG: 2 eine erste Variante der Anlage gemäß FIG. 1,
FIG. 3 eine weitere Variante der Anlage 1,
FIG. 4 ebenfalls eine Variante von Fig. 1, und
FIG. 5 eine letzte Variante der beschriebenen Anlage.

Ein Werkstück 10 wird mittels eines Pneumatikzylinders 12 auf ein Werkzeug 14 gedrückt. Das Werkstück 10 stellt einen Düsenkörper dar, welcher eine koaxiale Sacklochbohrung 16 und in dieser mündende dünne Querbohrungen 18 aufweist. Das Werkzeug 14 trägt einen Stift 20, der mit Radialabstand in das Sackloch 16 des Werkstückes 10 hineinragt und am oberen Ende auf dem Höhenniveau der Querbohrungen 18 eine Anode 22 trägt. Das Werkzeug 14 weist eine Kammer 24 auf, in die eine Elektrolytleitung 26 mündet, welcher Elektrolyt aus einem Vorratsbecken 28 zugeführt wird. Die Zufuhr erfolgt über eine Pumpe 30 und einen Volumendurchflußmesser 32, wobei zwischen Pumpe 30 und Durchflußmesser 32 ein Druckminderventil 34 angeordnet ist, der für einen konstanten Druck des Elektrolyten beim Eintritt in den Durchflußmesser 32 sorgt. Der Druck des Elektrolyten in der Werkzeugkammer 24 wird mittels eines Manometers 36 gemessen.

Während des Bearbeitungsprozesses strömt der Elektrolyt aus der Kammer 24 in den Ringraum zwischen Sackloch 16 und Stift 20 nach oben in den Bereich zwischen Anode 22 und den Bohrungskanten der Querbohrungen 18 und verläßt das Werkstück 10 durch diese Querbohrungen 18, wird in einem Auffangbecken 38 aufgefangen und gelangt über eine Rücklaufleitung 40 in eine nicht dargestellte Filteranlage und von dort zurück in das Vorratsbecken 28.

Im Ausführungsbeispiel stellt das Werkstück 10 einen Düsenkörper einer Einspritzdüse z.B. für Dieselmotoren dar. Aufgrund von Bestrebungen, Treibstoff zu sparen, besteht die Forderung, daß diese Düsen bei 100 bar einen Solldurchfluß innerhalb eines Toleranzbereiches von +/- 1% einhalten und zwar bei einer Messung mit zur Düsenprüfung üblichem Düsenprüföl. Die Düsenkörperrohlinge haben nach der mechanischen Bearbeitung an den inneren Mündungsstellen der Querbohrungen 18 unvermeidbare Grate, die elektrochemisch entfernt werden müssen, sodaß die Mündungskanten beim fertigen Düsenkörper gerundet sind.

Erfindungsgemäß wird nun so vorgegangen, daß die Pumpe 30 eingeschaltet wird, um den Elektrolytkreislauf in Gang zu setzen. Sobald der vorgegebene Druck am Manometer 36 erreicht wird, wird die Arbeitsspannung angelegt, sodaß ein Arbeitsstrom zwischen Anode 22 und den Mündungsrändern der Querkanäle 18 des als Kathode dienenden Werkstückes 10 fließt. Nach einer Bearbeitungsdauer, die je nach Gradbildung zwischen 1 und 3 Sekunden liegen kann, wird am Ende der Bearbeitungsdauer der Volumenstrom am Durchflußmessgerät 32 gemessen und elektronisch zwischengespeichert. Der Düsenkörper 10 wird dann aus der Bearbeitungsvorrichtung entfernt und in eine nicht dargestellte Prüfeinrichtung eingesetzt. In dieser wird das Sackloch 16 an eine Prüföl-Druckquelle angeschlossen. Diese steht beispielsweise unter einem Druck von 100 bar. Das aus den Querbohrungen 18 austretende Prüföl wird mengenmäßig pro Zeiteinheit gemessen. Der Durchfluß-Istwert liegt in der Regel unter dem Sollwert. Die Differenz ist ein Maß für die Verlängerung der Arbeitsdauer und/oder der Höhe des Arbeitsstromes für den nächsten Probelauf, der mit einem neuen Werkstückrohling durchgeführt wird. Der Durchflußmesser 32 mißt am Ende des Bearbeitungsvorganges einen höheren Durchflußwert als im ersten Probelauf. Auch dieser zweite Durchflußwert wird zwischengespeichert, wonach das Werkstück der Bearbeitungsvorrichtung entnommen und einer erneuten Kalibriermessung unterzogen wird. Mit einer gewissen Erfahrung reichen zwei oder drei Probeläufe aus, um beim Kalibrieren einen Istwert zu erreichen, der dem Sollwert mindestens nahekommt. Für die anschließende Serienbearbeitung der Werkstücke wird dann der zwischengespeicherte Durchflußwert des Durchflußmessers 32 im letzten Probelauf mit allenfalls geringfügiger Korrektur entsprechend dem Abstand zwischen Ist- und Sollwert während des Kalibrierens als Regelgröße eingestellt. Die Serienbearbeitung erfolgt dann nicht mehr zeitabhängig gesteuert, sondern der Istwert des Elektrolytdurchflusses im Durchflußmesser 32 wird mit dem eingestellten Sollwert verglichen und bei Übereinstimmung beider Werte wird der elektrochemische Bearbeitungsvorgang beendet.

Erfahrungen mit dem neuen Verfahren bestätigen, daß bei der Serienbearbeitung eine bleibende Übereinstimmung mit den Prüföl-Kalibrierungen im engen Toleranzbereich von etwa 1% auf Sollniveau erreicht wird.

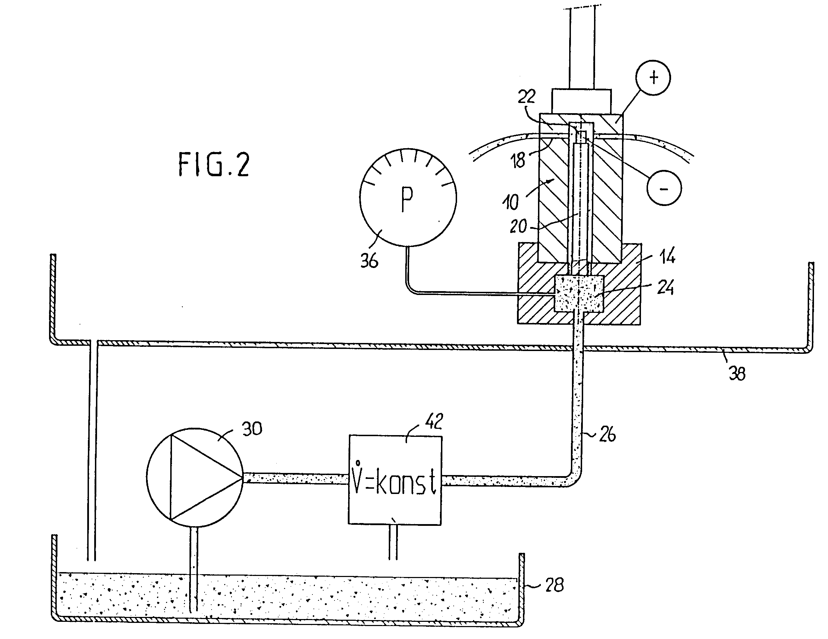

Die Variante gemaß Figur 2 arbeitet anstelle eines konstanten Versorgungsdruckes des Elektrolyten mit einem Durchflußregler 42, der den Elektrolytstrom auf konstanten Durchsatz einregelt. Während der elektrochemischen Bearbeitung werden die Grate an den Mündungen der Querbohrungen abgebaut und gerundet. Dabei sinkt der Strömungswiderstand. Der abzulesende Druck am Manometer 36 fällt entsprechend. Der Druck am Ende des ersten Probelaufes wird wiederum zwischengespeichert, wonach das Werkstück wiederum einer Kalibriermessung unterzogen wird. Auch hier sind einige Probeläufe in der Regel erforderlich, um eine Kalibrierung auf dem gewünschten Sollwert zu erreichen. Der diesem Sollwert entsprechende Druck des Elektrolyten in der Kammer 24 wird vom Manometer 36 aufgezeichnet und zwischengespeichert und dient dann als Regelgröße für die anschließende Serienfertigung.

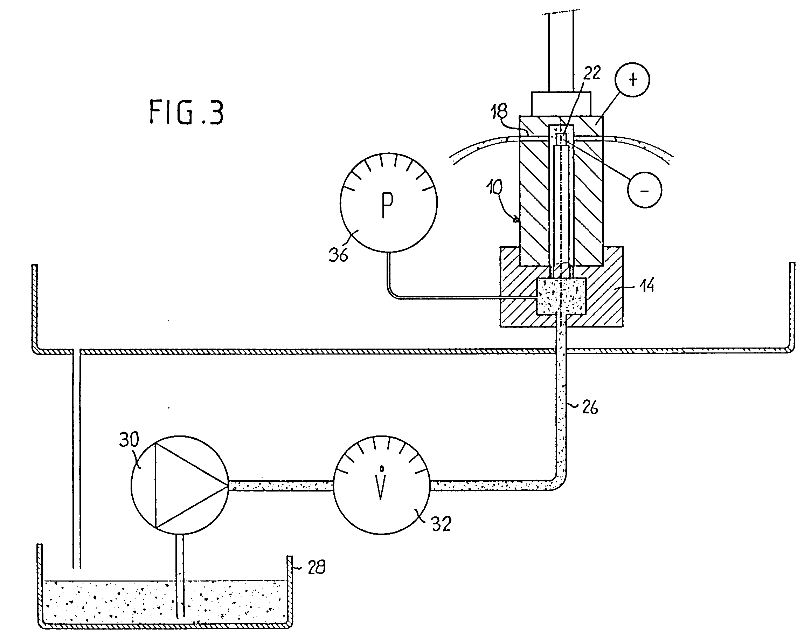

Figur 3 veranschaulicht eine Variante insofern, als das Verfahren auch ausführbar ist, ohne entweder den Druck oder das Volumen des Elektrolyten konstant zu halten. Allerdings muß die Pumpe 30 eine konstante Kennlinie besitzen, sodaß bei gleichen Strömungsbedingungen im Werkstück 10 sich der Durchfluß und der Druck auf gleiche Werte einregeln. Bei dieser Variante müssen der Durchfluß mit dem Durchflußmeßgerät 32 und der Druck mit dem Manometer 36 bestimmt und zwischengespeichert werden. Für die Serienfertigung werden dann beide Regelgrößen parallel als Eingänge in einen Rechner verwendet, der eine Beziehung über die einprogrammierte Kennlinie der Pumpe 30 herstellt und den Serien-Bearbeitungsvorgang abschaltet, wenn die gemessenen Werte des Durchflusses 32 und des Manometers 36 einen über die Pumpenkennlinie zusammengesetzten Wert ergeben, der mit dem im letzten Probelauf ermittelten Wert übereinstimmt.

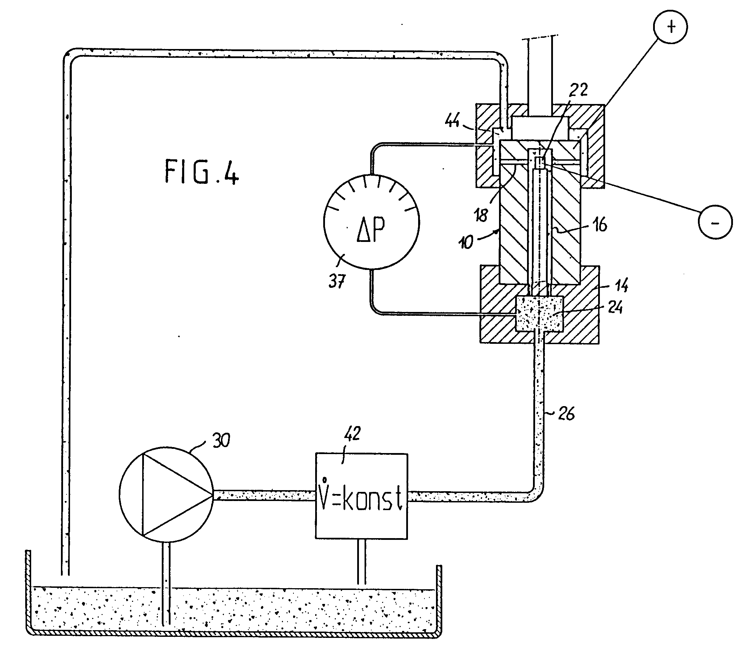

Die Variante gemäß Fig. 4 ähnelt derjenigen der Druckmessung gemäß Fig. 2. Auch hier wird im Elektrolytvorlauf ein Durchflußregler 42 eingesetzt, der für einen konstanten Flüssigkeitsstrom sorgt. Allerdings wird nicht der absolute Druck des Elektrolyten in der Werkzeugkammer 24 gemessen, sondern die Druckdifferenz zwischen dieser Kammer 24 und einer stromabseitig hinter dem Werkstück 10 liegenden Kammer 44, in die der Elektrolyt aus den Querbohrungen 18 des Werkstückes 10 gelangt. Da mit zunehmender Kantenabrundung an den Mündungen dieser Querbohrungen 18 der Strömungswiderstand abnimmt, sinkt entsprechend die Druckdifferenz. Diese kann also als Regelgröße für die Serienbearbeitung genutzt werden, was allerdings wie bei den bekannten Verfahren mehrmalige Probeläufe mit jedesmal anschließender Kalibrierungsmessung voraussetzt. Ist durch diese Vorläufe die einer bestimmten Kalibrierung entsprechende Soll-Druckdifferenz gefunden so wird die anschließende Serienbearbeitung immer dann beendet, wenn die Ist-Druckdifferenz die Soll-Druckdifferenz erreicht hat. Alle Werkstücke haben dann denselben Bearbeitungszustand, sind also gleich kalibriert.

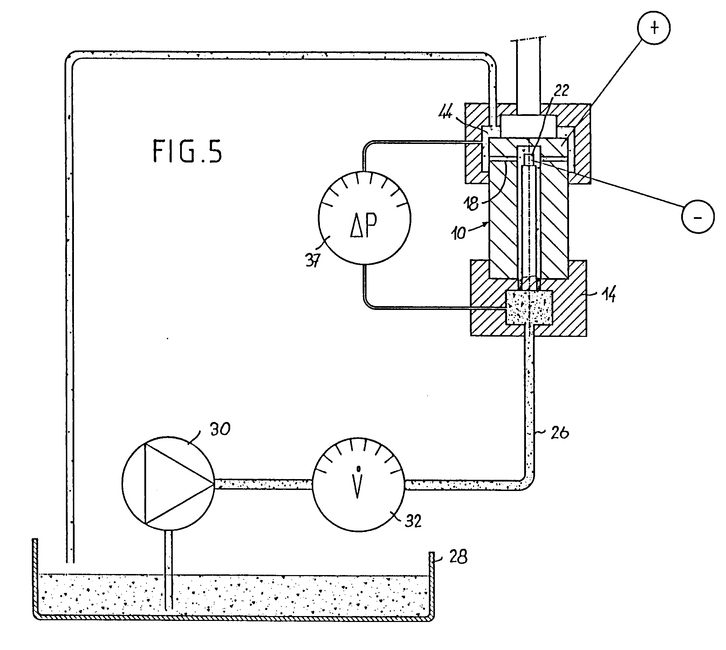

Figur 5 schließlich zeigt eine Variante, die der letztbeschriebenen Variante gemäß Figur 4 ähnlich ist und sich nur dadurch unterscheidet, daß anstelle des Durchflußreglers 42 ein Durchflußmeßgerät 32 verwendet wird, wobei wiederum beide Meßwerte der Meßgeräte 32 und 37 über die Pumpenkennlinie zu einem mathematischen Rechenwert zusammengesetzt werden, auf den dann die Serienbearbeitung abgestellt wird.

## Patentansprüche

1. Verfahren zum elektrochemischen Bearbeiten von Strömungskanälen metallischer Werkstücke, insbesondere von, enge Strömungskanäle aufweisenden Düsenkörpern mittels in diese eintauchender Werkzeuge und einem Elektrolytstrom zwischen dem Werkzeug und dem Strömungskanal, wobei ein Werkstück (10) in einem Probelauf elektrochemisch bearbeitet wird und mindestens einer, der den Volumenstrom des Elektrolyten und dessen Druck umfassenden physikalischen Elektrolytwerte gemessen und zwischengespeichert wird und das Werkstück (10) mit Prüföl unter hohem Druck kalibriert wird, indem der Istdurchfluß ermittelt und mit einem Solldurchfluß verglichen wird, und daß bei Abweichungen beider Durchflußwerte weitere Probeläufe durchgeführt werden, bis beim Kalibrieren der Istdurchfluß mit dem Solldurchfluß übereinstimmt, und wobei der aus dem letzten Probelauf ermittelte Elektrolytwert als Sollwert gespeichert und für die anschließende Serienbearbeitung der Werkstücke (10) als Regelgröße für die Beendigung der Bearbeitungen verwendet wird, **dadurch gekennzeichnet, daß** der Druck des Elektrolyten während der elektrochemischen Bearbeitung in den Probeläufen und bei der Serienbearbeitung in der Größenordnung von 100 bar gehalten wird.

2. Verfahren nach Anspruch 1, **dadurch gekennzeichnet, daß** bei Messung des Volumenstromes des Elektrolyten dessen Druck wenigstens angenähert konstant gehalten wird.

3. Verfahren nach Anspruch 1 , **dadurch gekennzeichnet, daß** der mindestens eine Elektrolytwert während des Bearbeitungsvorganges ständig gemessen wird.

4. Verfahren nach Anspruch 1, **dadurch gekennzeichnet, daß** wenigstens während der Endphase der Bearbeitung die Messung des mindestens einen Elektrolytwertes erfolgt, nachdem der Arbeitsstrom wenigstens vorübergehend abgeschaltet ist.

5. Verfahren zum elektrochemischen Bearbeiten von Strömungskanälen metallischer Werkstücke, insbesondere von, enge Strömungskanäle aufweisenden Düsenkörpern mittels in diese eintauchender Werkzeuge und einem Elektrolytstrom zwischen dem Werkzeug und dem Strömungskanal, wobei mindestens einer, der den Volumenstrom des Elektrolyten und dessen Druck umfassenden physikalischen Elektrolytwerte des Elektrolytstromes in einem mit Prüföl unter hohem Druck vorher kalibrierten Referenz-Musterwerkstück gemessen und der ermittelte Elektrolytwert als Sollwert gespeichert und für die anschließende Serienbearbeitung der Werkstücke (10) als Regelgröße für die Beendigung der Bearbeitungen verwendet wird, **dadurch gekennzeichnet, daß** der Druck des Elektrolyten während der elektrochemischen Serienbearbeitung der Werkstücke in der Größenordnung von 100 bar gehalten wird.

6. Verfahren nach Anspruch 5, **dadurch gekennzeichnet, daß** bei Messung des Volumenstromes des Elektrolyten dessen Druck wenigstens angenähert konstant gehalten wird.

7. Verfahren nach Anspruch 5, **dadurch gekennzeichnet, daß** der mindestens eine Elektrolytwert während des Bearbeitungsvorganges ständig gemessen wird.

8. Verfahren nach Anspruch 5, **dadurch gekennzeichnet, daß** wenigstens während der Endphase der Bearbeitung die Messung des mindestens einen Elektrolytwertes erfolgt, nachdem der Arbeitsstrom wenigstens vorübergehend abgeschaltet ist.

## Claims

1. A process for the electrochemical treatment of flow channels in metal workpieces, in particular nozzle bodies having narrow flow channels, by means of tools extending into the nozzle bodies and an electrolytic flow between the tool and the flow channel, wherein a workpiece (10) is electrochemically treated in a test run and at least one of the physical electrolytic values, including the volume flow of the electrolyte and the pressure thereof, is measured and temporarily stored and the workpiece (10) is calibrated under high pressure using test oil, in which procedure the actual flow rate is determined and compared with a desired flow rate, and further test runs are carried out in the event of deviations of both flow-rate values until the actual flow rate corresponds to the desired flow rate during calibration, and wherein the electrolytic value determined from the last test run is stored as a desired value and used for the subsequent series treatment of the workpieces (10) as a controlled variable for terminating the treatments, characterised in that the pressure of the electrolyte during the electrochemical treatment in the test runs and during the series treatment is maintained in the region of 100 bar.

2. A process according to claim 1, characterised in that, during measurement of the volume flow of the electrolyte, its pressure is held at least substantially constant.

3. A process according to claim 1, characterised in that the at least one electrolytic value is constantly measured during the treatment process.

4. A process according to claim 1, characterised in that the at least one electrolytic value is measured at least during the end phase of the treatment after the working current has been at least temporarily switched off.

5. A process for the electrochemical treatment of flow channels in metal workpieces, in particular nozzle bodies having narrow flow channels, by means of tools extending into the nozzle bodies and an electrolytic flow between the tool and the flow channel, wherein at least one of the physical electrolytic values of the electrolytic flow, including the volume flow of the electrolyte and the pressure thereof, in a reference sample workpiece calibrated beforehand under high pressure using test oil is measured and the determined electrolytic value is stored as a desired value and used for the subsequent series treatment of the workpieces (10) as a controlled variable for terminating the treatments, characterised in that the pressure of the electrolyte during the electrochemical series treatment of the workpieces is maintained in the region of 100 bar.

6. A process according to claim 5, characterised in that, during measurement of the volume flow of the electrolyte, its pressure is held at least substantially constant.

7. A process according to claim 5, characterised in that the at least one electrolytic value is constantly measured during the treatment process.

8. A process according to claim 5, characterised in that the at least one electrolytic value is measured at least during the end phase of the treatment after the working current has been at least temporarily switched off.

## Revendications

1. Procédé d'usinage électrochimique de canaux d'écoulement dans des pièces métalliques, en particulier de corps de tuyère présentant des canaux d'écoulement étroits, à l'aide d'outils plongeant dans ceux-ci et d'un courant d'électrolyte entre l'outil et le canal d'écoulement, dans lequel une pièce à usiner (10) est usinée électrochimiquement au cours d'une opération d'essai et au moins l'une des valeurs physiques de l'électrolyte, comprenant le débit en volume de l'électrolyte et sa pression, est mesurée et mémorisée temporairement et la pièce à usiner (10) est calibrée à l'aide d'huile d'essai sous haute pression en déterminant le débit réel et en le comparant avec un débit de consigne et en réalisant, en cas d'écarts entre les deux valeurs de débit, d'autres opérations d'essai jusqu'à ce que, lors du calibrage, le débit réel corresponde au débit de consigne, la valeur de l'électrolyte déterminée lors de la dernière opération d'essai étant mémorisée comme valeur de consigne et utilisée, dans l'usinage en série successif des pièces à usiner (10), comme grandeur de réglage pour terminer les usinages, caractérisé par le fait que la pression de l'électrolyte est, pendant l'usinage électrochimique au cours des opérations d'essai et de l'usinage en série, maintenue de l'ordre de grandeur de 100 bars.

2. Procédé suivant la revendication 1, caractérisé par le fait que lors de la mesure du débit en volume de l'électrolyte, la pression de celui-ci est maintenue au moins environ constante.

3. Procédé suivant la revendication 1, caractérisé par le fait que l'eau moins une valeur de l'électrolyte est mesurée en continu pendant l'opération d'usinage.

4. Procédé suivant la revendication 1, caractérisé par le fait que la mesure de l'eau moins une valeur de l'électrolyte a lieu au moins pendant la phase finale de l'usinage, après que le courant de travail ait été au moins temporairement coupé.

5. Procédé d'usinage électrochimique de canaux d'écoulement dans des pièces métalliques, en particulier de corps de tuyère présentant des canaux d'écoulement étroits, à l'aide d'outils plongeant dans ceux-ci et d'un courant d'électrolyte entre l'outil et le canal d'écoulement, dans lequel au moins l'une des valeurs physiques de l'électrolyte du courant d'électrolyte, comprenant le débit en volume de l'électrolyte et sa pression, est mesurée sur une pièce à usiner typique de référence préalablement calibrée à l'aide d'huile d'essai sous haute pression et la valeur de l'électrolyte déterminée est mémorisée comme valeur de consigne et utilisée, dans l'usinage en série successif des pièces à usiner (10), comme grandeur de réglage pour terminer les usinages, caractérisé par le fait que la pression de l'électrolyte est, pendant l'usinage électrochimique en série des pièces à usiner, maintenue de l'ordre de grandeur de 100 bars.

6. Procédé suivant la revendication 5, caractérisé par le fait que lors de la mesure du débit en volume de l'électrolyte, la pression de celui-ci est maintenue au moins environ constante.

7. Procédé suivant la revendication 5, caractérisé par le fait que l'eau moins une valeur de l'électrolyte est mesurée en continu pendant l'opération d'usinage.

8. Procédé suivant la revendication 5, caractérisé par le fait que la mesure de l'eau moins une valeur de l'électrolyte a lieu au moins pendant la phase finale de l'usinage, après que le courant de travail ait été au moins temporairement coupé.
